Europäisches Patentamt

European Patent Office

Office européen des brevets

(11) Publication number: **0 085 676**
**B1**

# (12) EUROPEAN PATENT SPECIFICATION

(45) Date of publication of patent specification: **09.05.90**

(21) Application number: **81902428.2**

(22) Date of filing: **19.08.81**

(86) International application number:
**PCT/SE81/00232**

(87) International publication number:
**WO 83/00681 03.03.83 Gazette 83/06**

(51) Int. Cl.⁵: **B 65 G 69/06, B 01 J 8/18,
B 01 F 3/06, F 27 B 15/10,
F 28 C 3/12**

(54) LANCE FOR FLUIDIZING SLOW-MOVING MATERIAL.

(43) Date of publication of application:
**17.08.83 Bulletin 83/33**

(45) Publication of the grant of the patent:
**09.05.90 Bulletin 90/19**

(84) Designated Contracting States:
**AT CH DE FR GB LI NL**

(56) References cited:
**GB-A-1 027 622
GB-A-1 478 053
SE-B- 352 601
SE-B- 373 756
SE-C- 226 519**

(73) Proprietor: **NORVALVE AB
Box 2028
S-144 02 Rönninge (SE)**

(72) Inventor: **ERIKSSON, Hans Erik Henning
Sjöviksvägen 21
S-144 00 Rönninge (SE)**

(74) Representative: **Ström, Tore et al
Ström & Gulliksson AB Studentgatan 1 P.O. Box
4188
S-203 13 Malmö (SE)**

Courier Press, Leamington Spa, England.

## Description

The invention relates to a device for fluidizing flowable pulverulent material, comprising a connection piece defining an air passage extending between an air outlet at one end thereof connected to a fluidizing activator, and an air inlet at the other end thereof for connection to a source of pressurized air transmitted thereto in a series of pulsations, said activator having a frame connected to the outlet end of the connection piece and an air permeable diaphragm disposed across the air outlet in a manner such that pressurized air discharged through the air outlet must pass to and through the diaphragm which is supported by and covers the frame but is free to move in a pulsating movement when struck by pressurized air in pulses passing through the air outlet.

A device of this type is disclosed in GB-A-1 478 053, which describes an activator of pulsator type for fluidizing pulverulent or other slow-moving material. This type of activator can be mounted to the sides or the bottom of containers or discharge chutes in order to break up slow-moving material in the container or the chute so that the material will be fluidized so as to be emptied from the container or to flow along the chute, vault formation and jamming of the material thus being prevented. The activator has been found to be very efficient in practice and can be used in containers and chutes of different types because it can be easily adapted to the shape of the surfaces where it is to be mounted. However, it has been found that there are nevertheless occasions where even this prior art activator fails, viz, where the slow-moving material has to be flown through narrow passages wherein there is no sufficient space for mounting the activator so close to the passage that the activator can effectively actuate and fluidize the material in the passage. The object of the invention is to provide a device which is complementary to the prior art activator so that also such locations in a container or a discharge chute that are difficult to master can be reached for an efficient fluidization of the slow-moving material.

In order to achieve this object there is according to the invention provided a device of the type referred to, having the characteristics appearing from claim 1. This device will be termed pulsator lance below.

The pulsator lance according to the invention can be realized in many different embodiments for specific use thereof, and in order to explain the invention in more detail several embodiments will be described below with reference to the accompanying drawings, in which

FIG. 1 is a perspective view of the end portion of the lance in a first embodiment thereof,

FIG. 2 is a cross-sectional view along line II - II in FIG. 1,

FIG. 3 is a perspective view of a dismountable portion at one end of the lance and shows a second embodiment of the invention,

FIG. 4 is a cross-sectional view along line IV - IV in FIG. 3,

FIG. 5 is a perspective view corresponding to FIG. 3 of a third embodiment,

FIG. 6 is a cross-sectional view along line VI - VI in FIG. 5,

FIG. 7 is a perspective view corresponding to FIG. 3 of a fourth embodiment,

FIG. 8 is a cross-sectional view along line VIII - VIII in FIG. 7,

FIG. 9 is a perspective view corresponding to FIG. 3 of a fifth embodiment of the invention, and

FIG. 10 is a cross-sectional view along line X - X in FIG. 9.

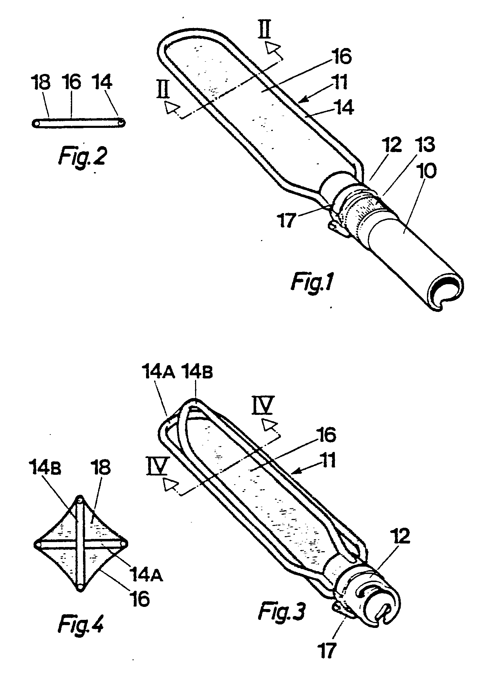

Referring to FIGs. 1 and 2 the pulsator lance according to the invention disclosed therein comprises a shaft 10 formed by a conduit tube of proper length; only a small part of the tube has been shown in FIG. 1. An end portion generally designated 11 is removably secured to the conduit tube 10. This end portion comprises a tube piece 12 forming one half of a quick-coupling the other half 13 of which is arranged on the tube 10 such that the end portion can be easily secured to the tube and dismounted therefrom. An elongated loop or yoke 14 of rod or tube material is secured to the tube piece 12, and a bag or hose 16 is passed onto the loop or yoke said bag or hose comprising a suitable air permeable fabric, e.g. a fabric of a synthetic material. The fabric is secured by means of a hose clamp 17 which clamps the fabric around the tube piece 12. The fabric 16 thus is maintained in a stretched condition by means of the loop or yoke 14, and the space, designated 18 in FIG. 2, defined inside the fabric communicates through the tube piece 12 with the interior of the conduit tube 10.

A pulsator not shown herein is connected to the conduit tube at the other end thereof, and the lance should be connected to a proper source of pressurized air via this pulsator for the supply of pulses of pressurized air through the conduit tube 10 to the space 18. These pulses of pressurized air preferably having a frequency ranging from 10 to 40 Hz, escape through the fabric 16 mechanical movement at the same time being imparted to the fabric by the pulsating air.

The end portion 11 of the lance can be introduced into slow-moving material, e.g. pulverulent material, and due to the emitted pulses of pressurized air penetrating into the material and the simultaneous movement of the fabric there is obtained an efficient fluidization of the material around the end portion 11. The pulsator can be connected as a separate unit to the conduit tube 10 but it can also be mounted in the conduit tube such that the pulsator lance can be connected directly to a terminal for the supply of pressurized air. The hose clamp 17 which may comprise a common clamp of the worm type, makes possible to dismount easily the fabric 16 for replacement if the fabric has been worn or damaged but also for cleaning or sterilization which may be desirable in some cases, particularly in the food industry, the pharmaceutical industry and some chemical industries. The quick-coupling between the conduit tube 10 and the end portion 11 moreover makes possible to dismount the entire end portion for sterilization.

As mentioned above the fabric can comprise a synthetic material, e.g. PERLON, but it can also comprise a wire netting and it is also possible to replace said fabric by a thin sheet material or thin metal sheet having a small-bored and closely spaced perforation. All these different types of material are included by the generic term "air permeable diaphragm" which has been used in the claims. The purpose of the air permeable diaphragm is to spread the air and to prevent the slow-moving material from penetrating into the tube 10 and the space communicating therewith and to perform at the same time a mechanical movement under the influence of the air pulses, and every material besides those mentioned herein, which can operate in this manner can be used in the pulsator lance according to the invention.

The end portion is flat as shown in FIGs. 1 and 2 but it can also be curved or angled depending on the place of use of the pulsator lance. It should always have the form which is best suited for the space where it shall operate for fluidization of slow-moving material.

In FIGs. 3 and 4 which are now referred to, there is shown a development of the embodiment according to FIGs. 1 and 2 the fabric 16 formed as a hose, being passed over two loops or yokes 14A and 14B which are secured to the tube piece 12 at right angles to each other. The space 18 as a consequence thereof will be considerably larger, and the pulsator lance will have four operating surfaces instead of two only as in FIGs. 1 and 2. The intention is, of course, that the end portion according to FIGs. 3 and 4 shall be mounted to the conduit tube 10 by means of the quick-coupling 12, 13 in the same manner as described above. This end portion provides a more efficient fluidization than the embodiment according to FIGs. 1 and 2 but on the other hand said end portion may be difficult to apply in narrow spaces.

The number of loops or yokes can be more than two, as shown in FIGs. 3 and 4. In this embodiment the end portion 11 can be tapered at the free end, e.g. conical or pyramidical, but it can also be spherically curved at this end.

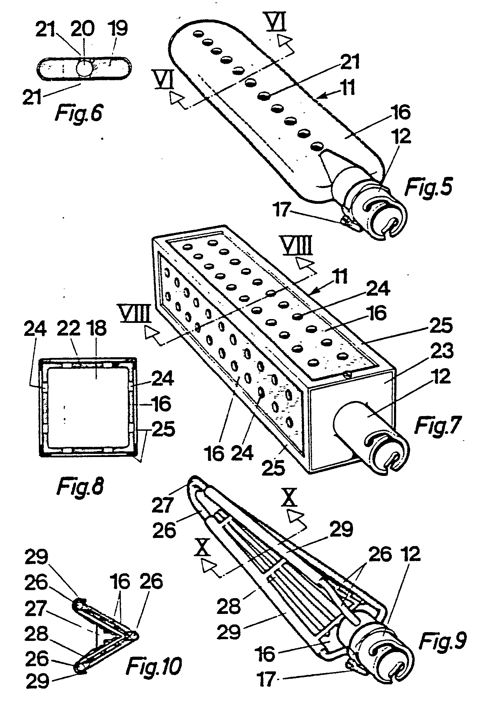

In FIGs. 5 and 6 there is shown another modification of the embodiment in FIGs. 1 and 2 wherein the loop or yoke 14 is replaced by a plate or "paddle" 19 in which there is provided a longitudinal central passage 20 communicating with the conduit tube 10 through the tube piece 12 when the end portion is connected to the conduit tube. From the passage 20 transverse passages 21 extend to the two flat sides of the plate. The fabric 16 also in this case formed as a hose, is passed over the plate and is fixed by means of the hose clamp 17, and the operation of this embodiment of the pulsator lance is the same as that previously described.

The embodiment according to FIGs. 7 and 8 may be said to be a modification of the embodiment of FIGs. 3 and 4, the space 18 being defined by a tube 22 having square cross-sectional form, The tube 22 has end walls one of which is shown at 23 and is connected to the tube piece 12 forming a socket for connection to the space 18. A corresponding end wall is arranged at the other end to completely close that end of the tube 22. At said other end the end wall may have pyramidical form so as to facilitate the insertion of the pulsator lance into the slow-moving material. However, it is within the scope of the invention to arrange an opening in said end wall, which is covered by a fabric of the same type as that mentioned above, so that the pulsator lance provides a fluidizing action also at said end. The main fluidizing action in the embodiment according to FIGs. 7 and 8 is obtained, however, by the tube 22 having a number of openings 24 in the four sides thereof, these openings being covered by means of a fabric 16 of the type mentioned above, which is secured to the tube by means of frames, flat irons or angle irons 25 fixed by screws to the tube 22 in order to clamp the fabric. In this case the fabric does not comprise a hose but rectangular pieces of fabric. The frames, flat irons or angle irons 25 not only secure the fabric but also form a protecting edge lining on the end portion where the edges are particularly exposed when the pulsator lance is being used. The tube 22 is shown to have square cross-sectional form but it can also have circular or other cross-sectional form.

Finally, there is shown in FIGs. 9 and 10 an embodiment of the end portion which may be particularly well suited for fluidization of slow-moving material in conveyor chutes or the like. In this case three bars 26 or tubes are arranged in a triangle said bars being connected to the tube piece 12 at one end thereof and being joined to form a taper 27 at the other end thereof, said taper being curved in a greater or less degree. In this case the fabric 16 is again formed by a hose which is passed over the bars 16 and is secured to the tube piece 12 by means of the hose clamp 17. However, a screen 28 is secured by means of slotted clamp sockets 29 or the like to the frame formed by the bars 26 on the outside of the fabric 16, and this screen has a shape which follows the shape of the V formed by the triangularly arranged bars 26 so as to keep the fabric 16 down such that it follows the V-shape. In this manner the fabric 16 defines a V-shaped space 18 and the end portion forms a V-shaped chute tapering towards the free end.

As will be gathered from the embodiments described the invention provides a pulsator lance which can be used in many ways due to the possibility of using end portions shaped in different ways and each particularly suitable for the purpose thereof. The pulsator lance according to the invention therefore is much more efficient than such prior art lances which consist of a tube only, open at one end thereof, for the supply of pressurized air. Such lances provide no fluidization in the surroundings of the lance; they only produce a hole through the slow-moving material.

In the first place the pulsator lance is intended to be a separate implement which can be applied where it is needed but it is also conceivable to more permanently install the pulsator lance. For example the lance can be pivotally mounted in the lid of a container so as to have the end portion in the outlet passage located at the bottom of the container so that a swinging or oscillating movement can be imparted to the pulsator lance when it is being used.

## Claims

1. A device for fluidizing flowable pulverent material, comprising a connection piece (10) defining an air passage extending between an air outlet (13) at one end thereof connected to a fluidizing activator, and an air inlet at the other end thereof for connection to a source of pressurized air transmitted thereto in a series of pulsations, said activator having a frame (14; 14A, 14B; 19; 22; 26) connected to the outlet end the connection piece and an air permeable diaphragm (16) disposed across the air outlet in a manner such that pressurized air discharged through the air outlet (13) must pass to and through the diaphragm (16) which is supported by and covers the frame but is free to move in a pulsating movement when struck by pressurized air in pulses passing through the air outlet, characterized in that the connection piece (10) forms an elongated shaft with the activator at the outlet end thereof forming an axial extension of the shaft so as to provide together with the activator a lance to be inserted in a mass of slow-moving pulverent material at the activator end thereof, and in that the frame (14; 14A, 14B; 19; 22; 26) together with the diaphragm (16) defines an elongated space the bounding walls of which include at least two opposite side walls having outlet openings covered by the diaphragm, and which is connected at one end thereof to the air outlet (13).

2. Device as claimed in claim 1, characterized in that the diaphragm (16) is formed as a hose or the like which is passed onto a bar or tube frame (14; 14A, 14B; 26).

3. Device as claimed in claim 2, characterized in that the bar or tube frame is formed by an elongated yoke or loop (14) which is connected at one end thereof to the shaft 10) or an element (12) to be connected thereto.

4. Device as claimed in claim 3, characterized in that two or more elongated yokes or loops (14A, 14B) are arranged in planes crossing each other.

5. Device as claimed in claim 2, characterized in that a screen (28) or the like is arranged on the bar or tube frame (26) to deform the diaphragm (16) substantially to the shape of the frame.

6. Device as claimed in claim 1, characterized in that the diaphragm (16) has the form of a hose or the like which is passed onto a plate-shaped frame (19) having passages (20, 21) for the supply of pressurized air, said passages opening in at least one of the flat sides of the frame.

7. Device as claimed in claim 1, characterized in that the diaphragm (16) is arranged on a box-shaped frame (22) having openings (24) in the sides thereof.

8. Device as claimed in any of claims 1 or 2, characterized in that the diaphragm (16) comprises a fabric or metal netting.

9. Device as claimed in any of claims 1 to 7, characterized in that the diaphragm (16) comprises a thin sheet with a fine-bored and closely spaced perforation.

## Patentansprüche

1. Vorrichtung zum Fluidisieren von fließfähigem, pulverförmigem Materials mit einem Verbindungsstück (10), das einen Luftdurchgang bildet, der sich zwischen einem an einen Fluidisierungsaktivator angeschlossenen Luftauslaß (13) an einem Ende und einem zum Anschluß an eine Quelle von pulsierend zugeführter Druckluft bestimmten Lufteinlaß am anderen Ende erstreckt, wobei der Fluidisierungsaktivator einen Rahmen (14; 14A; 14B; 19; 22; 26) aufweist, der mit dem Auslaßende des Verbindungsstücks verbunden ist, und ein luftdurchlässiges Diaphragma (16), das derart quer über dem Luftauslaß (13) angeordnet ist, daß die durch den Luftauslaß (13) ausströmende Druckluft durch das Diaphragma (16) hindurchströmen muß, das von dem Rahmen gehalten ist und diesen abdeckt, aber in pulsierende Bewegung versetzbar ist, wenn es von der pulsierend durch den Luftauslaß hindurchtretenden Druckluft beaufschlagt wird, dadurch gekennzeichnet, daß das Verbindungsstück (10) einen langgestreckten Schaft bildet, an dessen Auslaßende der Aktivator eine axiale Verlängerung des Schaftes darstellt und zusammen mit dem Aktivator eine Lanze bildet, die mit dem Aktivator voran in eine sich langsam bewegende Masse pulverförmigen Materials einführbar ist, und daß der Rahmen (14; 14A; 14B; 19; 22; 26) zusammen mit dem Diaphragma (16) einen langgestreckten Raum umgrenzt, dessen Begrenzungswände mindestens zwei gegenüberliegende Seitenwände mit durch das Diaphragma abgedeckten Auslaßöffnungen umfaßt und der an einem Ende an den Luftauslaß (13) angeschlossen ist.

2. Vorrichtung nach Anspruch 1, dadurch gekennzeichnet, daß das Diaphragma (16) als Schlauch oder dergleichen ausgebildet ist, der auf einem Stab- oder Rohrrahmen (14; 14A; 14B; 26) aufgeschoben ist.

3. Vorrichtung nach Anspruch 2, dadurch gekennzeichnet, daß der Stab- oder Rohrrahmen aus einem länglichen Bügel oder einer länglichen Schlaufe (14) gebildet ist, welche an ihrem einen Ende mit dem Schaft (10) oder einem daran befestigten Element (12) verbunden ist.

4. Vorrichtung nach Anspruch 3, dadurch gekennzeichnet, daß zwei oder mehr längliche Bügel oder Schlaufen (14A, 14B) in einander kreuzenden Ebenen angeordnet sind.

5. Vorrichtung nach Anspruch 2, dadurch gekennzeichnet, daß ein Schirm (28) oder dergleichen an dem Stab- oder Rohrrahmen (26) angeordnet ist, der das Diaphragma (16) im wesentlichen in die Form des Rahmens bringt.

6. Vorrichtung nach Anspruch 1, dadurch gekennzeichnet, daß das Diaphragma (16) die Form eines Schlauches oder dergleichen hat, der auf einen plattenförmigen, mit Durchgängen (20, 21) für die Preßluftzufuhr versehenen Rahmen (19) aufgeschoben ist, wobei diese Durchgänge sich auf mindestens einer der flachen Seiten des Rahmens öffnen.

7. Vorrichtung nach Anspruch 1, dadurch gekennzeichnet, daß das Diaphragma (16) auf einem kastenförmigen Rahmen (22) angeordnet ist, der an seinen Seiten Öffnungen (24) aufweist.

8. Vorrichtung nach Anspruch 1 oder 2, dadurch gekennzeichnet, daß das Diaphragma (16) aus einem Textilstoff oder Metall-Netzstoff besteht.

9. Vorrichtung nach Anspruch 1 bis 7, dadurch gekennzeichnet, daß das Diaphragma (16) aus einer dünnen Folie mit einer feingebohrten, dicht beieinanderliegenden Perforation besteht.

**Revendications**

1. Dispositif servant à fluidifier un matériau pulvérulent pouvant s'écouler, comprenant une pièce de connexion (10) définissant un passage d'air qui s'étend entre une sortie d'air (13) à l'une de ses extrémités connectée à un activateur de fluidisation, et une entrée d'air à son autre extrémité pour connexion à une source d'air pressurisé qui lui est transmis dans une série de pulsations, l'activateur comprenant un châssis (14; 14A, 14B; 19; 22; 26) relié au côté sortie de la pièce de connexion et un diaphragme perméable à l'air (16) disposé à travers la sortie d'air d'une manière telle que l'air pressurisé déchargé par l'intermédiaire de la sortie d'air (13) doive passer jusqu'au diaphragme (16) et le traverser, lequel est supporté par le châssis qu'il recouvre mais peut se déplacer librement dans un mouvement pulsatoire lorsqu'il est frappé par l'air pressurisé en impulsions traversant la sortie d'air, caractérisé en ce que la pièce de connexion (10) forme un arbre allongé avec l'activateur à son côté sortie, formant une extension axiale de l'arbre de manière à fournir avec l'activateur une lance devant être insérée dans une masse de matériau pulvérulent à son côté activateur, et en ce que le châssis (14; 14A, 14B; 19; 22; 26) définit avec le diaphragme (16) un espace allongé dont les parois de limitation comportent au moins deux parois latérales opposées présentant des ouvertures de sortie recouvertes par le diaphragme, et qui est connecté à l'une de ses extrémités à la sortie d'air (13).

2. Dispositif selon la revendication 1, caractérisé en ce que le diaphragme (16) se présente sous la forme d'un tuyau souple ou analogue qui passe sur un châssis à barres ou tubulaire (14; 14A, 14B; 26).

3. Dispositif selon la revendication 2, caractérisé en ce que le châssis à barres ou tubulaire comporte un étrier allongé ou boucle (14) qui est relié à l'une de ses extrémités à l'arbre (10) ou à un élément (12) devant lui être connecté.

4. Dispositif selon la revendication 3, caractérisé en ce que deux étriers allongés ou boucles ou davantage (14A, 14B) sont disposés dans des plans se coupant.

5. Dispositif selon la revendication 2, caractérisé en ce qu'un écran (28) ou analogue est disposé sur le châssis à barres ou tubulaire (26) pour déformer le diaphragme (16) et lui faire prendre sensiblement la forme du châssis.

6. Dispositif selon la revendication 1, caractérisé en ce que le diaphragme (16) se présente sous la forme d'un tuyau souple ou analogue qui est passé sur un châssis en forme de plaque (19) comportant des passages (20, 21) pour la fourniture d'air pressurisé, les passages débouchant dans au moins l'un des côtés plats du châssis.

7. Dispositif selon la revendication 1, caractérisé en ce que le diaphragme (16) est disposé sur un châssis en forme de boîte (22) ayant des ouvertures (24) dans ses côtés.

8. Dispositif selon l'une quelconque des revendications 1 ou 2, caractérisé en ce que le diaphragme (16) est constitué d'un treillis en tissu ou en métal.

9. Dispositif selon l'une quelconque des revendications 1 à 7, caractérisé en ce que le diaphragme (16) est constitué d'une feuille fine avec des perforations aux trous fins et espacées étroitement les unes des autres.

18 16 14

*Fig.2*

II

16

II

11

14

12 13

10

17

*Fig.1*

14A 14B

IV

16

IV

11

14B 18

12

14A

16

17

*Fig.4*

*Fig.3*

1

Fig.6

Fig.5

Fig.8

Fig.7

Fig.10

Fig.9